# EUROPEAN PATENT APPLICATION

(11) **EP 2 482 475 A1**
(43) Date of publication of application: **01.08.2012**
(21) Application number: 10818552.1
(22) Date of filing: 22.09.2010
(51) Int. Cl.: H04B 17/00, H04J 99/00

(54) **FADING SIGNAL FORMING DEVICE, CHANNEL SIGNAL TRANSMISSION DEVICE, AND FADING SIGNAL FORMING METHOD**

(30) Priority: 25.09.2009 JP 2009221249
(71) Applicant: Panasonic Corporation, Kadoma-shi Osaka 571-8501 (JP)
(72) Inventor: HAYASHI, Toshiteru, Osaka 540-6207 (JP); SOTOYAMA, Takayuki, Osaka 540-6207 (JP)
(74) Representative: Grünecker, Kinkeldey, Stockmair & Schwanhäusser
(86) International application number: PCT/JP2010/005739
(87) International publication number: WO 2011/036874

(57) **Abstract**

Provided are a fading signal forming device, a channel signal transmission device, and a fading signal forming method, by which a complicated time-space can be constructed with a simple structure. In the fading signal forming device (200), each signal forming base unit (220-1 to 4) respectively inputs a channel signal, duplicates the channel signal, and performs adjustment to the respective duplicated signal, so that a plurality of fading signals are formed. Specifically, phase adjustment units (231-1, 2) provided on the signal forming base unit (220) perform phase rotation of the duplication signals at different rotation amounts corresponding to the relative position relationship between the main antenna and the sub-antenna, to thereby form a spatial fading signal.

## Description

### Technical Field

The present invention relates to a fading signal forming device, a channel signal transmission device and a fading signal forming method.

### Background Art

In recent years, radio cellular systems typified by mobile phone sets or the like have diversified service modes and are required to transmit not only speech data but also large-volume data such as still images and moving images by a high speed. As one such technology of realizing high-speed, large-volume transmission, MIMO (Multiple Input Multiple Output), which is a space division multiplexing scheme, is becoming a focus of attention and various research and development efforts and operation tests or the like are under way.

LTE (Long Term Evolution), which is a next-generation cellular system, assumes a service having a downlink peak rate on 100 Mbps and has determined to adopt MIMO technology for realizing this service.

MIMO transmission requires both a base station and a terminal to be provided with a plurality of antennas (multiple antennas). This transmission performance using MIMO technology depends on not only multi-antenna characteristics mounted on the terminal but also a relative environment between multiple antennas and a propagation environment surrounding the multiple antennas. Therefore, to satisfy quality requirements or the like for MIMO transmission, it is necessary to define a performance evaluation method and required performance for multiple antennas including the propagation environment.

Evaluating the performance of multiple antennas mounted on the terminal requires an OTA (Over The Air) evaluation using a spatial channel emulator that simulates a multipath environment, and 3GPP (3rd Generation Partnership Project) has currently started studies on this MIMO OTA.

Examples of MIMO OTA evaluation systems proposed until today include one disclosed in Non-Patent Literature 1. The MIMO OTA evaluation system disclosed in Non-Patent Literature 1 is configured of a fading simulator (FS) and an antenna for simulating local scatterers, and the system according to Non-Patent Literature 1 discloses a MIMO-based fading simulator that has eight output ports and performs signal processing for simulating an arbitrary multipath channel from the output ports, and eight antennas for simulating local scatterers connected to the respective output ports of the fading simulator. Therefore, in the MIMO OTA evaluation system in Non-Patent Literature 1, the fading simulator has eight independent channels, and can thereby generate eight independent fading waves weighted by eight spatially arranged antennas. In this way, the MIMO OTA evaluation system can construct a variety of space-times in a simulated fashion.

### Citation List

### Non-Patent Literature

NPL 1 3GPP TSG-RAN WG4 #50-BIS Seoul, South Korea, 23-27 March, 2009, R4-091104, Elektrobit, "MIMO OTA Testing"

### Summary of Invention

### Technical Problem

In a MIMO OTA evaluation system constructed of a fading simulator and antennas for simulating local scatterers, re-creating (generating) a more complicated simulative space-time requires that the number of antennas for local scatterers be increased and different fading waves be outputted from the respective antennas.

However, the MIMO OTA evaluation system described in Non-Patent Literature 1 needs to provide as many channels of the fading simulator as antennas for local scatterers, and therefore when the number of antennas increases, the number of channels increases in proportion thereto. Therefore, in the above-described MIMO OTA evaluation system, narrowing the antenna interval, increasing the number of antennas and densely arranging antennas in order to construct a more precise space-time would involve concern that the fading simulator might have an extremely complicated configuration, resulting in a high-cost evaluation system. On the other hand, widening the antenna interval and arranging a reduced number of antennas to reduce the cost would cause space-time densities to be reduced and cause the evaluation resolution of the MIMO OTA evaluation system itself to deteriorate.

It is an object of the present invention to provide a fading signal forming device, a channel signal transmission device and a fading signal forming method capable of constructing a complicated space-time with a simple structure.

### Solution to Problem

A fading signal forming device according to the present invention includes a fading signal forming section that receives a channel signal transmitted from a main antenna from a fading simulator as input and forms a plurality of fading signals transmitted from different sub-antennas based on the channel signal and a phase rotation section provided in the fading forming section, that adds a phase corresponding to a relative position relationship between the main antenna and the sub-antenna into the channel signal and outputs the channel signal as the fading signal.

A channel signal transmission device according to the present invention includes the above-described fading signal forming device, the main antenna and the sub-antennas, wherein the main antenna and the sub-antennas are provided with a vertical polarized antenna or horizontal polarized antenna and vertical polarized antenna respectively.

A fading signal forming method according to the present invention is a fading signal forming method for receiving a channel signal transmitted from a main antenna and forming a plurality of fading signals transmitted from different sub-antennas based on the channel signal, including a step of forming a duplication signal for duplicating the channel signal, and a fading signal forming step of adding a phase corresponding to a relative position relationship between the main antenna and the sub-antenna into the duplication signal and outputting the duplication signal as the fading signal.

### Advantageous Effects of Invention

The present invention can provide a fading signal forming device, a channel signal transmission device and a fading signal forming method capable of constructing a precise space-time with a simple structure.

### Brief Description of Drawings

FIG.1 is a block diagram showing a configuration of a MIMO OTA evaluation system according to Embodiment 1 of the present invention;
FIG.2 is a block diagram showing a configuration of a fading signal forming device according to Embodiment 1 of the present invention;
FIG.3 is a block diagram illustrating a configuration of a signal forming base unit;
FIG.4 is a diagram illustrating an arrangement of an antenna device;
FIG.5 is a block diagram illustrating a configuration of a signal adjustment section according to Embodiment 2 of the present invention;
FIG.6 is a block diagram illustrating a configuration of a signal forming base unit according to Embodiment 3 of the present invention;
FIG.7 is a block diagram illustrating a configuration of a channel signal transmission device according to Embodiment 4 of the present invention; and
FIG.8 is a diagram illustrating an antenna device according to Embodiment 4 of the present invention.

### Description of Embodiments

Hereinafter, embodiments of the present invention will be described in detail with reference to the accompanying drawings. In the embodiments, the same components will be assigned the same reference numerals and overlapping descriptions thereof will be omitted.

### (Embodiment 1)

### [MIMO OTA evaluation system 10]

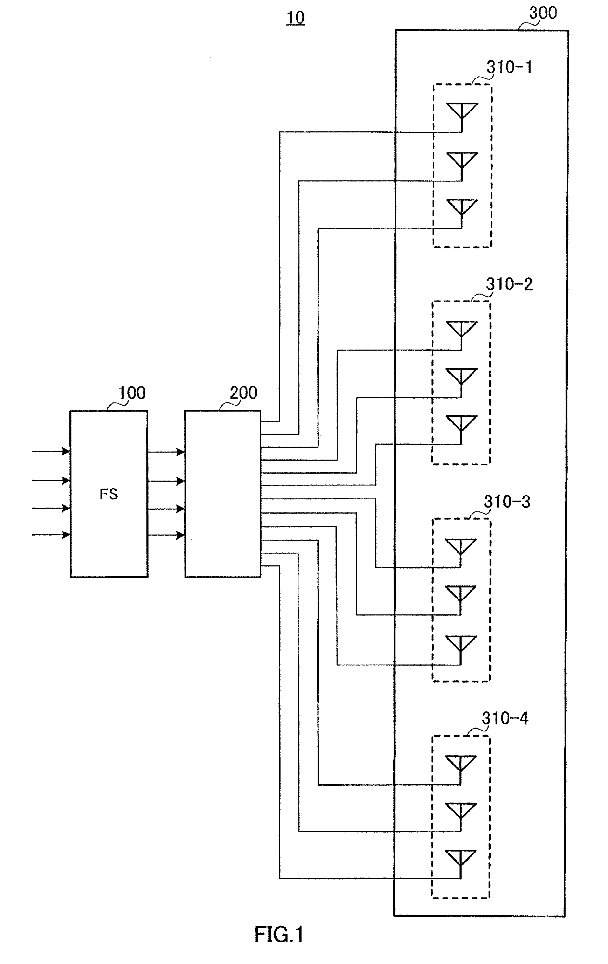

FIG.1 is a block diagram illustrating a configuration of MIMO OTA evaluation system 10 according to Embodiment 1. In FIG.1, MIMO OTA evaluation system 10 includes fading simulator (FS) 100, fading signal forming device 200 and antenna device 300. Fading simulator 100 shown in this example is a fading simulator that has four inputs and four outputs, and has a MIMO configuration of a maximum of 4 × 4, but may also be a fading simulator having other configurations, for example, of 8 × 8.

Fading simulator 100 receives a predetermined MIMO transmission signal as input, generates a spatio-temporal channel signal and outputs the signal to fading signal forming device 200. The spatio-temporal channel signal is generated by producing an arbitrary delay wave in an input signal and multiplying each delay wave produced by a MIMO channel matrix made up, for example, of 4 × 4 elements. The channel signal is subjected to such signal processing inside a MIMO-based fading simulator and then outputted from a plurality of output terminals.

Fading signal forming device 200 receives a channel signal group as input. Fading signal forming device 200 then duplicates a channel signal, adjusts each of the plurality of duplication signals and thereby forms a plurality of fading signals expressing spatial expansion. The channel signal and the plurality of fading signals are outputted from different antenna ports. To be more specific, the channel signal is outputted from a main antenna port connected to a main antenna, and the fading signals adjusted by phase-rotating the channel signal by different amounts of rotation are outputted from sub-antenna ports connected to sub-antennas.

Antenna device 300 is connected to each antenna port of fading signal forming device 200 and has antenna groups which are actually spatially arranged. Antenna device 300 then transmits the channel signals and fading signals received from fading signal forming device 200, from antennas that form a space.

### [Configuration of fading signal forming device 200]

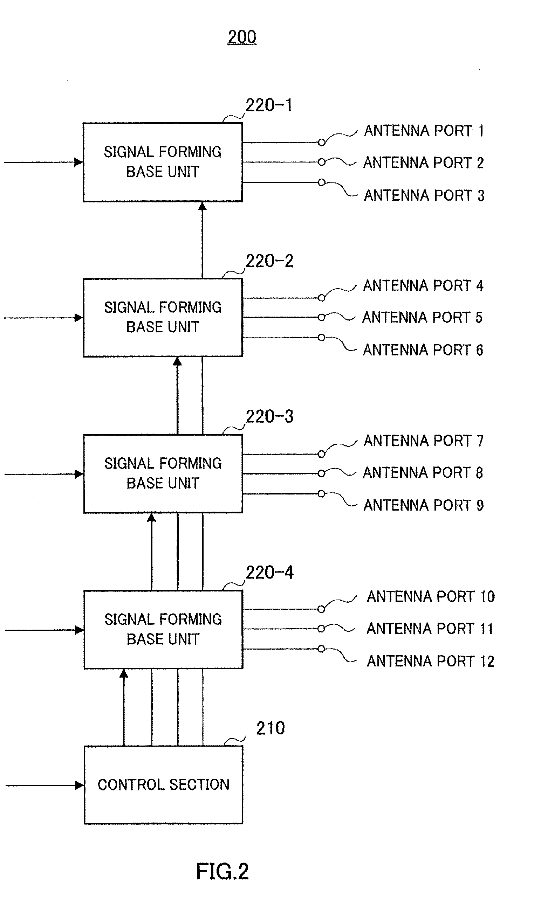

FIG.2 is a block diagram illustrating a configuration of fading signal forming device 200 according to Embodiment 1. In FIG.2, fading signal forming device 200 has control section 210 and signal forming base units 220-1 to 4.

Control section 210 generates signal adjustment control signals and outputs the control signals to signal forming base unit 220.

Signal forming base unit 220 receives the channel signal as input, duplicates the channel signal, adjusts each duplication signal and thereby forms a fading signal having spatial expansion. Signal forming base units 220-1 to 4 are subject to the four channel signals outputted from fading simulator 100 respectively.

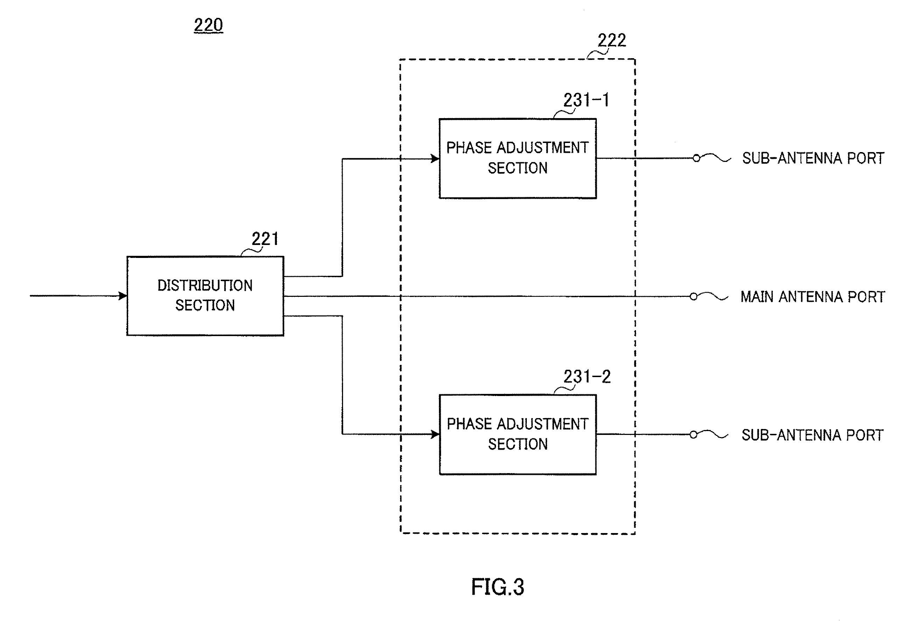

Signal forming base unit 220 has distribution section 221 and signal adjustment section 222 as shown in FIG.3.

Distribution section 221 forms a plurality of duplication signals from the inputted channel signal, and outputs the channel signal and the plurality of duplication signals to signal adjustment section 222.

Signal adjustment section 222 in Embodiment 1 has phase adjustment sections 231-1 and 2. Signal adjustment section 222 adjusts the duplication signal received from distribution section 221 based on the signal adjustment control signal received from control section 210 and thereby forms a spatial fading signal. To be more specific, antennas connected to phase adjustment sections 231-1 and 2 are arranged spatially on the right and left sides of a reference antenna to which a signal not passing through the phase adjustment section is inputted. Signal adjustment section 222 then gives a predetermined amount of phase rotation at phase adjustment sections 231-1 and 2, and thereby forms two fading signals of different amounts of Doppler shift. The amount of phase rotation given by phase adjustment sections 231-1 and 2 corresponds to a difference from the original signal having an amount of Doppler shift corresponding to the antenna arrangement.

For example, phase adjustment section 231-1 gives phase rotation by e^{j(w+Δw)t} and phase adjustment section 231-2 provides phase rotation by e^{j(w-Δw)t}. This causes two fading signals equally phase-rotated before and after the phase of the channel signal as a reference to be formed.

The fading signals formed in signal adjustment section 222 are outputted from sub-antenna ports connected to the sub-antennas to antenna device 300, and the channel signal is outputted from a main antenna port connected to the main antenna to antenna device 300. Here, a case has been described where there are two phase adjustment sections 222 and two sub-antenna ports, but there are no restrictions other than that the number of antennas needs to be an odd number, and in cases where there are three or more antennas, the device may also be constructed with similar means.

### [Configuration of antenna device 300]

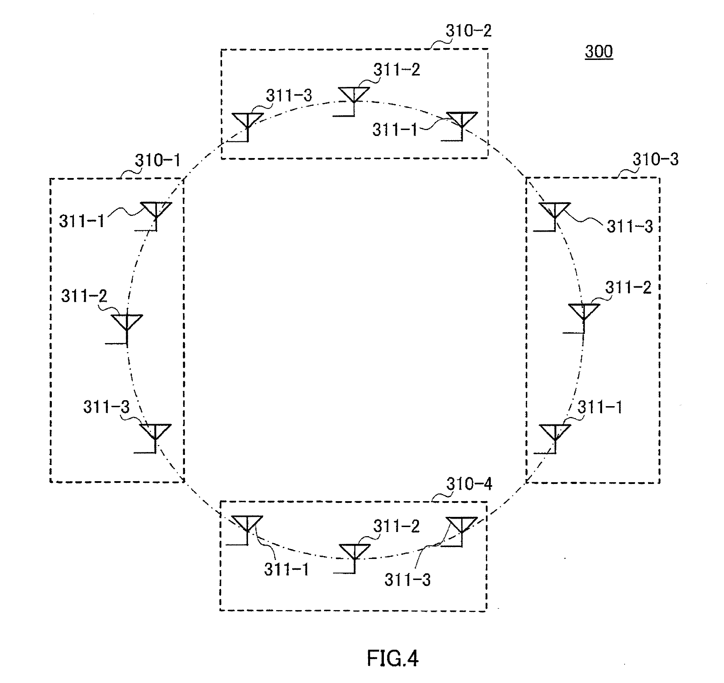

FIG.4 is a diagram illustrating a configuration of antenna device 300. Antenna device 300 has the same number of antenna groups 310 as signal forming base units 220. Here, since four signal forming base units 220 subject to the four channel signals outputted from fading simulator 100 are assumed, antenna groups 310-1 to 4 are provided. Antenna groups 310-1 to 4 correspond to signal forming base units 220-1 to 4 respectively.

Each antenna group 310 has antennas 311-1 to 3. Antennas 311-1 and 3 are connected to phase adjustment sections 231-1 and 2 respectively via antenna ports. That is, antenna 311-2 is a main antenna that transmits a channel signal and is arranged in the center of each group, and antennas 311-1 and 3 are sub-antennas that transmit a fading signal.

All antennas 311 provided for antenna device 300 are arranged on the same circumference. Furthermore, in each antenna group 310, antennas 311-1 to 3 are arranged in order of antennas 311-1, 2 and 3 in one direction (clockwise or counterclockwise).

A terminal of multi-antenna (receiving antenna) to be evaluated is arranged in the center of the circle on which above antennas 311 are disposed.

### [Operation of fading signal forming device 200]

Operation of fading signal forming device 200 configured as shown above will be described.

The channel signal generated by fading simulator 100 and simulating an arbitrary multipath propagation is inputted to fading signal forming device 200.

In fading signal forming device 200, signal forming base units 220-1 to 4 each receive a channel signal as input, duplicate the channel signal, adjust each duplication signal and thereby form a plurality of fading signals.

To be more specific, phase adjustment sections 231-1 and 2 provided in signal forming base unit 220 phase-rotate the duplication signal by different amounts of rotation and thereby form two fading signals.

The fading signals and channel signals formed in this way are outputted from different antenna ports.

When a fading simulator is connected to each antenna, the same number of attenuators, delay lines and phase shifters as the number of antennas × attenuator for the number of delays such as ∑ _{(i: number of antennas)} ∑ _{(n: number of delays)}Aᵢₙe^{jwint+Δtin} are required, but adopting such a configuration only requires a configuration with the same number of attenuators, delay lines and phase shifters as attenuator for the number of delays such as ∑ _{(i: number of sub-antennas)} [( ∑ _{(n: number of delays)}Aᵢₙe^{jwnt+Δtn})e^{wcosθit}] and the same number of phase shifters as the number of sub-antennas. As a result, it is possible to construct a precise space-time with a relatively simple circuit structure.

### (Embodiment 2)

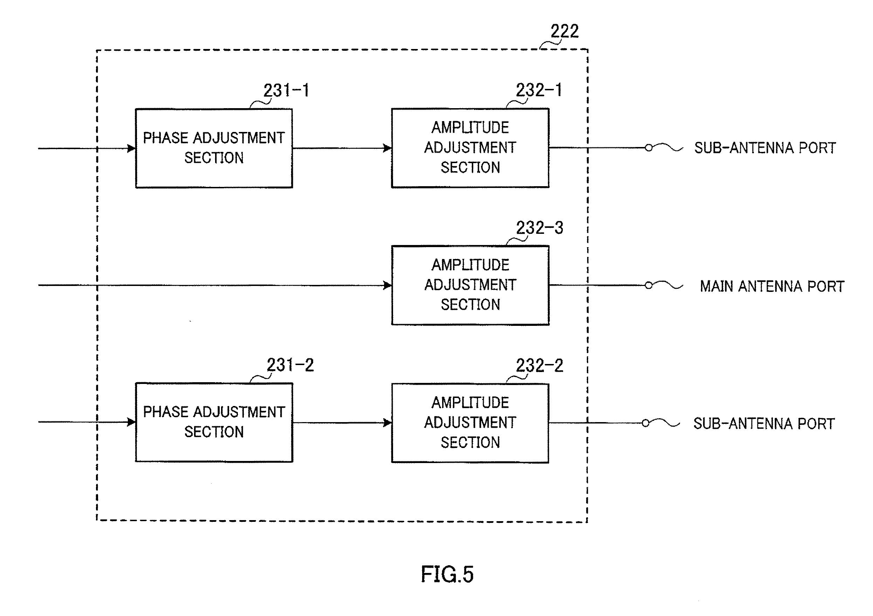

FIG.5 is a block diagram illustrating a configuration of signal adjustment section 222 according to Embodiment 2. In FIG.5, signal adjustment section 222 has amplitude adjustment sections 232-1 to 3.

Amplitude adjustment sections 232-1 to 3 adjust the amplitudes of their respective fading signals and channel signal. This makes it possible to change the space-time center of gravity having an incoming wave distribution that forms a certain group such as a Gaussian distribution or Laplacian distribution.

### (Embodiment 3)

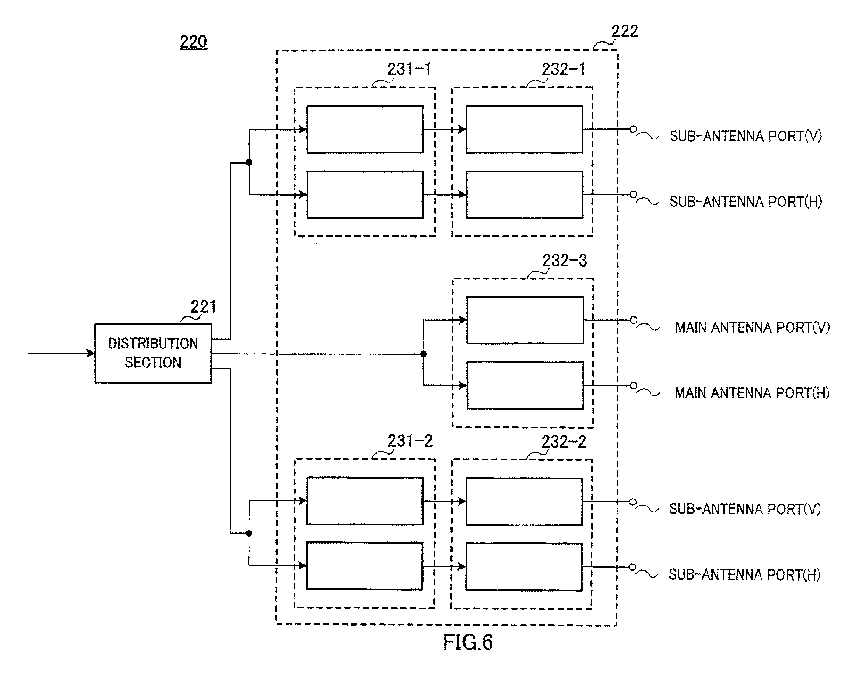

FIG.6 is a block diagram illustrating a configuration of signal forming base unit 220 according to Embodiment 3. In signal adjustment section 222 of signal forming base unit 220 in FIG.6, phase adjustment section 231 and amplitude adjustment section 232 each have two processing sections belonging to; a system linked to a vertical polarized antenna port and a system linked to a horizontal polarized antenna port.

In a channel signal transmission device made up of fading signal forming device 200 and antenna device 300 of the present embodiment, each antenna 311 is constructed of a horizontal polarization antenna and a vertical polarization antenna.

By doing so, it is possible to generate a space-time taking into account XPR (cross polarization ratio) generated in a cellular environment, and realize MIMO OTA evaluation system 10 close to an actual environment.

### (Embodiment 4)

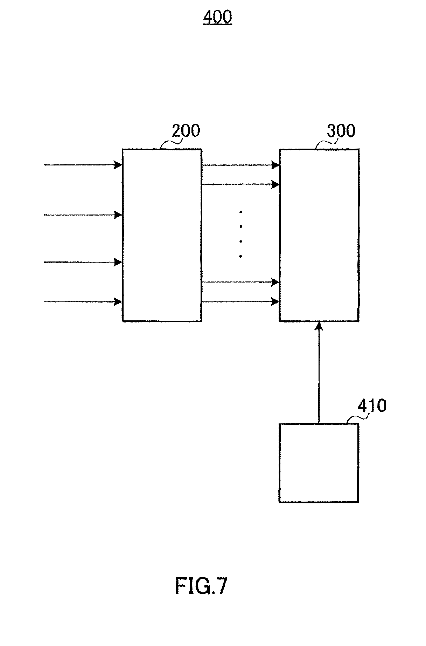

FIG.7 is a block diagram illustrating a configuration of channel signal transmission device 400 according to Embodiment 4. In FIG.7, channel signal transmission device 400 has fading signal forming device 200, antenna device 300 and antenna position adjustment apparatus 410.

Antenna position adjustment apparatus 410 adjusts a setup position (that is, spatial coordinates) of antenna 311 without changing a setup posture of antenna 311 (that is, three-dimensional coordinate system using a reference point in antenna 311 in a set up condition as the origin).

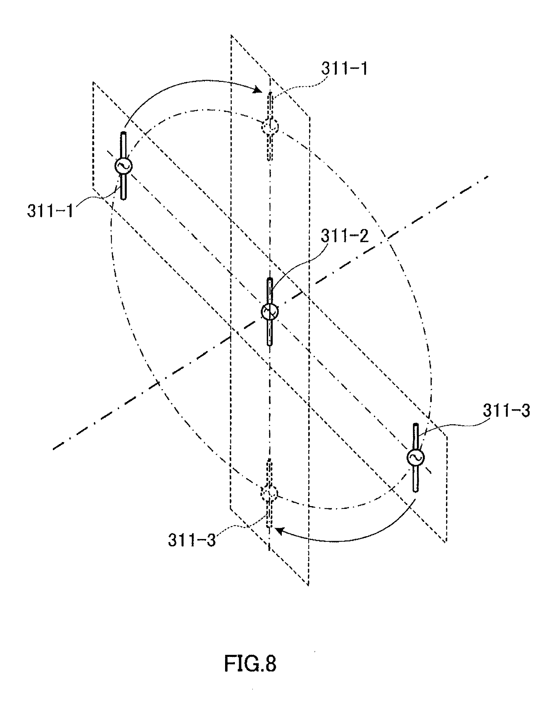

To be more specific, as shown in FIG.8, antenna group 310 is attached to a circular frame. For example, antenna 311-2, which is a main antenna, is attached to the central axis of the circular frame and antennas 311-1 and 3 are attached at positions on the periphery of the circular frame and opposite to each other across the central axis. Furthermore, antennas 311-1 to 3 are axially attached to the circular frame respectively.

Antenna position adjustment apparatus 410 adjusts the amount of rotation of a motor (not shown), power of the motor is transmitted to the central axis of the circular frame, and the circular frame thereby rotates. This causes the positions of antennas 311-1 and 3 with respect to antenna 311-2 to change. That is, antenna position adjustment apparatus 410 controls the rotation of the circular frame, and can thereby realize a plurality of antenna arrangement patterns.

Furthermore, since antennas 311-1 to 3 are axially attached to the circular frame, it is possible to always keep the postures of antennas 311-1 to 3 constant, based on the same principle as that of gondolas of a Ferris wheel which are always oriented in the vertical direction. FIG.8 shows an antenna arrangement pattern in which antennas 311-1 to 3 are arranged horizontally and an antenna arrangement pattern in which antennas 311-1 to 3 are arranged vertically, and the postures of antennas 311-1 to 3 are kept in the vertical direction in any antenna arrangement pattern.

This makes it possible to perform MIMO OTA evaluation in a plurality of antenna arrangement patterns without increasing the number of antennas 311.

The disclosure of Japanese Patent Application No.2009-221249, filed on September 25, 2009, including the specification, drawings and abstract is incorporated herein by reference in its entirety.

### Industrial Applicability

The fading signal forming device, channel signal transmission device and fading signal forming method according to the present invention are useful as those capable of constructing a complicated space-time with a simple structure.

### Reference Signs List

10 MIMO OTA evaluation system
100 fading simulator
200 fading signal forming device
210 control section
220 signal forming base unit
221 distribution section
222 signal adjustment section
231 phase adjustment section
232 amplitude adjustment section
300 antenna device
310 antenna group
311 antenna
400 channel signal transmission device
410 antenna position adjustment apparatus

## Claims

1. A fading signal forming device comprising:
a fading signal forming section that receives a channel signal transmitted from a main antenna, from a fading simulator as input and forms a plurality of fading signals transmitted from different sub-antennas based on the channel signal; and
a phase rotation section provided in the fading forming section, that adds a phase corresponding to a relative position relationship between the main antenna and the sub-antenna into the channel signal, and outputs the channel signal as the fading signal.

2. The fading signal forming device according to claim 1, further comprising an amplitude adjustment section that adjusts amplitudes of the channel signal and the fading signal.

3. The fading signal forming device according to claim 1, further comprising a delay section that adjusts output timing of the channel signal and the fading signal.

4. A channel signal transmission device comprising the fading signal forming device, the main antenna and the sub-antenna according to claim 1, wherein:
the main antenna and the sub-antenna comprise a vertical polarized antenna or horizontal polarized antenna and vertical polarized antenna respectively.

5. The channel signal transmission device according to claim 4, further comprising an antenna position adjustment section that adjusts positions of the plurality of antennas.

6. A fading signal forming method for receiving a channel signal transmitted from a main antenna and forming a plurality of fading signals transmitted from different sub-antennas based on the channel signal, comprising:
a step of forming a duplication signal for duplicating the channel signal; and
a fading signal forming step of adding a phase corresponding to a relative position relationship between the main antenna and the sub-antenna into the duplication signal, and outputting the duplication signal as the fading signal.
